(19) Europäisches Patentamt
European Patent Office
Office européen des brevets

(11) **EP 2 602 046 A2**

(12) **EUROPÄISCHE PATENTANMELDUNG**

(43) Veröffentlichungstag:
**12.06.2013   Patentblatt 2013/24**

(51) Int Cl.:
**B23K 11/11** *(2006.01)*      **B23K 11/24** *(2006.01)*

(21) Anmeldenummer: **12195451.5**

(22) Anmeldetag: **04.12.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **08.12.2011   DE 102011087958**

(71) Anmelder: **KUKA Roboter GmbH**
**86165 Augsburg (DE)**

(72) Erfinder:
• **Birner-Such, Tanja**
**86163 Augsburg (DE)**
• **Dietrich, Simon**
**86169 Augsburg (DE)**

(74) Vertreter: **Patentanwälte**
**Funk & Böss GbR**
**Sigmundstraße 1**
**80538 München (DE)**

(54) **Schweißroboter**

(57)      Die Erfindung betrifft einen Schweißroboter zum Widerstandsschweißen, der eine Schweißzange (21), einen mit Schweißelektroden (24, 25) der Schweißzange (21) verbundenen Schweißstromgenerator (1) zum Versorgen der Schweißelektroden (24, 25) mit elektrischer Energie während des Widerstandsschweißens, und einen Industrieroboter aufweist. Der Industrieroboter umfasst einen Roboterarm (2) und eine Robotersteuervorrichtung (9) zum Bewegen des Roboterarms (2). Am Roboterarm (2) ist die Schweißzange (21) befestigt und die Robotersteuervorrichtung (9) ist mit dem Schweißstromgenerator (1) und einem Zangenantrieb (26, 27) der Schweißzange (21) verbunden.

FIG. 1

**Beschreibung**

Die Erfindung betrifft einen Schweißroboter.

Die DE 31 15 840 A1 offenbart beim Widerstandsschweißen, bei dem automatisch während des Schweißens der elektrische Widerstand zwischen zwei Schweißelektroden durch Änderung des Elektrodenandrucks einer Bezugswiderstandskurve angepasst und zusätzlich die elektrische Spannung an den Schwei-βelektroden einer Bezugsspannungskurve angepasst wird.

Die EP 1 508 396 B1 offenbart einen Schweißroboter, welcher einen Industrieroboter und eine Schweißzange umfasst, die am Roboterarm des Industrieroboters befestigt ist. Die Schweißzange, welche mittels des Roboterarms bewegt werden kann, umfasst zwei Elektrodenarme, einen elektrischen Motor zum Bewegen der Elektrodenarme, und Kraftsensoren zum Ermitteln der von den Elektrodenarmen aufgebrachten Andruckskraft. Die Schweißvorrichtung umfasst ferner eine Regeleinrichtung, welche eingerichtet ist, aufgrund der Abweichung von der Ist-Andruckskraft von der Soll-Andruckskraft eine Stellgröße für die Motorposition des elektrischen Motors zu erzeugen.

Die Aufgabe der Erfindung ist es, einen verbesserten Schweißroboter anzugeben.

Die Aufgabe der Erfindung wird gelöst durch einen Schweißroboter zum Widerstandsschweißen, aufweisend

- eine Schweißzange, die einen Zangenantrieb und zwei, mittels des Zangenantriebs gegeneinander drückbare Schweißelektroden aufweist, welche im bestimmungsgemäßen Betriebs des Schweißroboters gegen wenigstens zwei mittels Widerstandsschweißens zu verschweißende Gegenstände drükken,
- einen mit den Schweißelektroden verbundenen Schweißstromgenerator zum Versorgen der Schweißelektroden mit elektrischer Energie während des Widerstandsschweißens, und
- einen Industrieroboter, der einen Roboterarm und eine Robotersteuervorrichtung zum Bewegen des Roboterarms aufweist, wobei der Roboterarm mehrere, hintereinander angeordnete Glieder und mit der Robotersteuervorrichtung verbundene Antrieben aufweist, am Roboterarm die Schweißzange befestigt ist, die Robotersteuervorrichtung mit dem Schweißstromgenerator und dem Zangenantrieb verbunden ist und auf der Robotersteuervorrichtung ein Rechenprogramm läuft, welches die Antriebe des Roboterarms für dessen Bewegung ansteuert, den Zangenantrieb derart regelnd ansteuert, sodass während des Widerstandsschweißens an den Schweißelektroden ein vorgegebener elektrischer Soll-Schweißwiderstand anliegt, und den Schweißstromgenerator derart ansteuert, sodass dieser die Schweißelektroden mit einer vorgegebenen elektrischen Energie versorgt.

Der erfindungsgemäße Schweißroboter umfasst demnach die Schweißzange, deren Schweißelektroden mittels des Schweißgenerators während des Schweißens mit elektrischer Energie versorgt werden, wie dies dem Fachmann im Prinzip für das Widerstandspunktschweißen bekannt ist. Der Schweißgenerator umfasst z.B. einen Schweißumrichter, insbesondere einen Mittelfrequenz-Schweißumrichter, einen Schweißtrafo und einen Schweißgleichrichter, wie dies dem Fachmann im Prinzip bekannt ist. Der Schweißgenerator ist vorzugsweise eingerichtet, für die Schweißelektroden eine einstellbare, gepulste elektrische Spannung zu erzeugen, damit durch die Schweißelektroden während des Widerstandsschweißens ein vorgegebener elektrischer Strom fließt. Das Widerstandsschweißen ist insbesondere ein Widerstandspunktschweißen, kann aber z.B. auch ein Widerstandsnahtschweißen sein.

Der erfindungsgemäße Schweißroboter umfasst ferner den Industrieroboter, an dessen Roboterarm die Schweißzange befestigt ist. Erfindungsgemäß läuft auf der Robotersteuervorrichtung des Industrieroboters das Rechenprogramm, das nicht nur die Bewegung der Antriebe des Roboterarms steuert, gegebenenfalls regelt, sondern auch eine Regelung der Kraft, mit der die Schweißelektroden mittels des Zangenantriebs gegen die zu verschweißenden Gegenstände drückt, realisiert. Der Zangenantrieb ist vorzugsweise ein elektrischer Zangenantrieb. Erfindungsgemäß wird für diese Regelung der elektrische Schweißwiderstand, also der elektrische Widerstand der zu verschweißenden Gegenstände in Abhängigkeit der Kraft, mit der die wenigstens zwei Gegenstände durch die Schweißzange während des Schweißens zusammen gedrückt werden, als Führungsgröße verwendet. Des Weiteren ist das Rechenprogramm erfindungsgemäß derart ausgeführt, dass es den Schweißstromgenerator derart ansteuert, dass dieser die Schweißelektroden mit einer gewünschten elektrischen Energie versorgt. Dies kann z.B. derart realisiert sein, indem der erfindungsgemäße Schweißroboter derart eingerichtet ist, dass das auf der Robotersteuervorrichtung laufende Rechenprogramm derart ausgeführt ist, dass es während des Vorgangs des Widerstandsschweißens dem Schweißgenerator eine Information über einen elektrischen Soll-Strom für die Schweißelektroden übermittelt und der Schweißstromgenerator insbesondere eingerichtet ist, eine elektrische Versorgungsspannung für die Schweißelektroden derart zu erzeugen, dass durch die Schwei-βelektroden zumindest im Mittel der elektrische Soll-Strom fließt.

Somit ist die Robotersteuervorrichtung bzw. das darauf laufende Rechenprogramm derart ausgeführt, dass die komplette Steuerung bzw. Regelung des Schweißvorgangs mittels einer einzigen Steuerung, nämlich derjenigen Steuerung, welche für die Bewegung des Roboterarms vorgesehen ist, verwirklicht ist. Dadurch ist es insbesondere möglich, eine Synchronisation der Bewegung des Roboterarms, des Schweißstromgenerators und der Schweißzange verbessert zu realisieren, als wenn die Steuerung bzw. Regelung der Schweißzange mittels einer separaten Schweißsteuerung durchgeführt werden würde. Des Weiteren wird nicht die Kraft, mittels derer die Schwei-βelektroden während des Schweißvorgangs gegeneinander drücken sollen als Führungsgröße für die Regelung der Schweißzange verwendet, sondern der Schweißwiderstand. Somit entfallen relativ teure Kraft- oder Dehnmessvorrichtungen zum Ermitteln der aktuellen Kraft, welche die Schweißzange ausübt. Der aktuelle Schweißwiderstand dagegen lässt sich z.B. in relativ einfacher Weise mittels des Schweißstromgenerators ermitteln, da diesem der aktuell durch die Schweißelektroden fließende elektrische Strom und die an den Schweißelektroden anliegende elektrische Spannung bekannt ist.

Gemäß einer bevorzugten Ausführungsform des erfindungsgemä-βen Schweißroboters umfasst das auf der Robotersteuervorrichtung laufende Rechenprogramm eine erste bidirektionale zum Schweißstromgenerator für eine bidirektionale Kommunikation mit dem Schweißstromgenerator. Die erste bidirektionale Schnittstelle ist insbesondere derart ausgeführt, dass sie eine Kommunikation in Echtzeit, vorzugsweise in harter Echtzeit, ermöglicht. Dadurch wird es der Robotersteuervorrichtung bzw. dem Rechenprogramm ermöglicht, eine Information über den aktuellen Schweißwiderstand zu erhalten. Dadurch wird es der Robotersteuervorrichtung bzw. dem Rechenprogramm ermöglicht, den Zangenantrieb der Schweißzange derart anzusteuern, dass das gewünschte Führungsverhalten, d.h. Regelung der Schweißzange mit dem Schweißwiderstand als Führungsgröße, zu realisieren.

Nach einer weiteren Variante des erfindungsgemäßen Schweißroboters ist das auf der Robotersteuervorrichtung laufende Rechenprogramm eingerichtet, den Zangenantrieb aufgrund einer Referenzkurve eines Soll-Schweißwiderstandes regelnd anzusteuern. Die Referenzkurve des Soll-Schweißwiderstandes kann vorzugsweise automatisch erzeugt werden. Dadurch regelt die Robotersteuervorrichtung den zeitlichen Verlauf des Schweißwiderstands während des Schweißvorgangs aufgrund der Referenzkurve durch Ansteuern des Zangenantriebs. Dadurch kann die Qualität des Schweißens verbessert werden.

Für eine verbesserte Regelung der Schweißzange aufgrund des Schweißwiderstandes kann das auf der Robotersteuervorrichtung laufende Rechenprogramm auch derart ausgeführt sein, dass die Robotersteuervorrichtung den Zangenantrieb gemäß einem Sollwert-Profil der von den Elektroden (24, 25) aufzubringenden Kraft zusätzlich regelnd ansteuert.

Nach einer weiteren Ausführungsform des erfindungsgemäßen Schweißroboters sind die Antriebe des Roboterarms als geregelte elektrische Antriebe ausgeführt. Die Robotersteuervorrichtung bzw. das Rechenprogramm ist dann vorzugsweise derart ausgeführt, dass sie mittels des Rechenprogramms den geregelten elektrischen Antrieben Soll-Werte für deren Bewegungen übermittelt.

Nach einer bevorzugten Ausführungsform des erfindungsgemäßen Schweißroboters weist das Rechenprogramm ein erstes Rechenprogramm und ein zweites Rechenprogramm auf. Das erste Rechenprogramm ist vorgesehen, die Antriebe des Roboterarms und insbesondere den Zangenantrieb anzusteuern. Das zweite Rechenprogramm ist vorgesehen, den Schweißstromgenerator derart anzusteuern, sodass dieser die Schweißelektroden mit der vorgegebenen elektrischen Energie versorgt und Soll-Werte für das Ansteuern des Zangenantriebs erzeugt, sodass während des Widerstandsschweißens an den Schweißelektroden der vorgegebene elektrische Soll-Schweißwiderstand anliegt. Das auf der Robotersteuervorrichtung laufende Rechenprogramm ist also derart ausgeführt, dass es eine Bewegungssteuerung des Roboterarms und des Zangenantriebs in Form des ersten Rechenprogramms und eine Schweißsteuerung in Form des zweiten Rechenprogramms umfasst. Dadurch kann z.B. eine bereits existierende Robotersteuervorrichtung, welche lediglich eine Bewegungssteuerung des Roboterarms umfasst, in relativ einfacher Weise um das zweite Rechenprogramm erweitert werden, sodass die gesamte Steuerung bzw. Regelung des Schweißroboters mittels der Robotersteuervorrichtung erfolgt. Vorzugsweise umfasst das zweite Rechenprogramm die gegebenenfalls vorhandene erste bidirektionale Schnittstelle zum Schweißstromgenerator.

Das zweite Rechenprogramm kann eine zweite bidirektionale Schnittstelle zum Kommunizieren mit dem ersten Rechenprogramm aufweisen. Die zweite bidirektionale Schnittstelle ist insbesondere derart ausgeführt, dass sie eine Kommunikation in Echtzeit, vorzugsweise in harter Echtzeit, ermöglicht.

Gemäß einer Variante des erfindungsgemäßen Schweißroboters kann die Robotersteuervorrichtung eingerichtet sein, mittels des zweiten Rechenprogramms mit dem Schweißgenerator insbesondere über einen schnellen Feldbus bidirektional in Echtzeit zu kommunizieren. Dadurch wird eine relativ schnelle Kommunikation zwischen der Robotersteuervorrichtung und dem Schweißstromgenerator ermöglicht.

Die Robotersteuervorrichtung kann auch eingerichtet sein, mittels des zweiten Rechenprogramms gleichzeitig den Schweißstromgenerator und den Zangenantrieb anzusteuern, und/oder gleichzeitig den Zangenantrieb und die Antriebe des Roboterarms anzusteuern.

Das zweite Rechenprogramm kann vom ersten Rechenprogramm Daten zur Schließung der Schweißzange erhalten und den Schweißstromgenerator abhängig von dieser Bewegung anzusteuern. Das zweite Rechenprogramm kann dem ersten Rechenprogramm vorgeben, den Zangenantrieb für ein Öffnen der Schweißzange anzusteuern. Das zweite Rechenprogramm kann von dem ersten Rechenprogramm Daten zur Drehung der Schweißzange um einen Schweißpunkt erhalten und den Schweißstromgenerator abhängig von dieser Drehung ansteuern. Das zweite Rechenprogramm kann auch mit einer Kalibrierstation für Schweißzangen Daten bidirektional insbesondere in Echtzeit austauschen. Außerdem kann eine automatische Kalibrierung elektrischer und mechanischer Kenngrößen der Schweißzange vorgesehen sein.

Mittels des erfindungsgemäßen Schweißroboters erhält man demnach ein Regelungsverfahren zum Widerstandsschweißen. Der Technologieprozess Widerstandsschweißen entsteht insbesondere durch das gesteuerte Zusammenwirken folgender Technologiegrößen:

- Schweißenergie
- Elektrodenkraft
- Zusatzbewegungen

Die Qualität des Technologieprozesses, und damit auch die Qualität des Schweißpunktes (Schweißqualität), ist insbesondere von der Güte der Steuerung bzw. Regelung der Technologiegrößen abhängig. Die Schweißqualität kann umso besser ausfallen, je genauer und je synchroner die Technologiegrö-βen geregelt werden.

Die Schweißenergie wird der Schweißzange vorzugsweise in der Form eines geregelten Schweißstromes zur Verfügung gestellt, der von dem Schweißstromgenerator erzeugt wird. Insbesondere wird dieser Strom von einem Mittelfrequenz-Schweißumrichter in Verbindung mit einer Kombination Schweißtransformator und Schweißgleichrichter des Schweißstromgenerators erzeugt.

Die Elektrodenkraft, d.h. die Kraft, mit der die Schweißelektroden gegeneinander drücken, wird durch den Zangenantrieb der Schweißzange realisiert. Zangenantriebe können z.B. pneumatisch, servopneumatisch oder elektromotorisch arbeiten. Vorzugsweise wird eine elektromotorisch angetriebene Schweißzange verwendet. Beim Widerstandsschweißen insbesondere beim Widerstandspunktschweißen mittels des erfindungsgemäßen Schweißroboters wird der Zangenantrieb in der Robotersteuervorrichtung vorzugsweise als Zusatzachse des Roboterarms (z.B. 7. Achse) abgebildet und wird daher von der Robotersteuervorrichtung angesteuert. Die Regelung der Elektrodenkraft geschieht ebenfalls per Software bzw. Rechenprogramm in der Robotersteuerungsvorrichtung.

Zusatzbewegungen der Schweißzange beim Widerstandspunktschweißen bzw. Widerstandsschweißen können Öffnen- / Schlie-βen-Bewegungen, Ausgleichsbewegung (Zangenausgleich), und Drehbewegungen sein.

Die Öffnen- / Schließen-Bewegungen der Schweißzange werden gegebenenfalls ebenfalls vom Zangenantrieb realisiert und werden vorzugsweise mit der Bewegung der Schweißzange relativ zum Werkstück koordiniert. Vor allem beim Widerstandspunktschweißen mittels eines Schweißroboters ist es vorteilhaft, die Schließbewegung der Schweißzange zumindest teilweise mit der Bewegung hin zum Schweißpunkt zu überlappen und andererseits die Öffnen-Bewegung der Schweißzange zumindest teilweise mit der Bewegung weg vom Schweißpunkt zu überlappen. Durch die Verzögerung des Beginns des Schweißstromes nach Schließen der Schweißzange und Aufbau der Elektrodenkraft wird eine Vorhaltezeit realisiert, wobei durch die Verzögerung der Öffnung der Schweißzange nach Beenden des Schweißstromes eine Nachhaltezeit realisiert wird. Vor- und Nachhaltezeit sind Schweißparameter, welche sich auf die Schweißqualität auswirken können. In einer vorteilhaften Variante des erfindungsgemäßen Schweißroboters wird die Steuerung der Öffnen- / Schließen-Bewegungen der Schweißzange mit der Steuerung des Schweißstromes koordiniert.

Die Ausgleichsbewegung der Schweißzange soll das Anpassen der Schweißzange an das Werkstück gewährleisten, bei sich ändernden Bedingungen wie Position des Werkstücks, Verschleiß der Elektrodenkappen, Durchbiegung der Zangenarme. Wegen der von der aktuellen Elektrodenkraft abhängigen Durchbiegung der Zangenarme, ist es vorteilhaft, die Steuerung der Ausgleichsbewegung eng mit der Steuerung / Regelung der Elektrodenkraft zu verknüpfen.

Die Drehbewegung der Schweißzange stellt eine Drehung der Schweißzange um die Achse des Schweißpunktes dar, gleichzeitig mit dem Ablauf der Schweißung. Diese gegebenenfalls vorhandene Bewegung wird gemäß einer Variante des erfindungsgemäßen Schweißroboters von der Robotersteuerungsvorrichtung gesteuert.

Je nach Ausführungsform des erfindungsgemäßen Schweißroboters kann dieser folgende Funktionen realisieren:

- Öffnen / Schließen der Schweißzange synchron mit der Bewegung des Roboterarms,
- Elektrodenkraft gesteuert / geregelt über die Zusatzachse der Robotersteuerung,
- Zangenausgleich synchron mit der Elektrodenkraft,
- Schweißstrom synchron mit der Elektrodenkraft,
- Schweißstrom synchron mit der Drehbewegung.

Ein Ausführungsbeispiel der Erfindung ist exemplarisch in den beigefügten schematischen Zeichnungen dargestellt. Es zeigen:

Fig. 1    einen Schweißroboter, der einen Industrieroboter und eine an dem Roboterarm des Industrieroboters befestigte Schweißzange aufweist, und

Fig. 2    die Schweißzange.

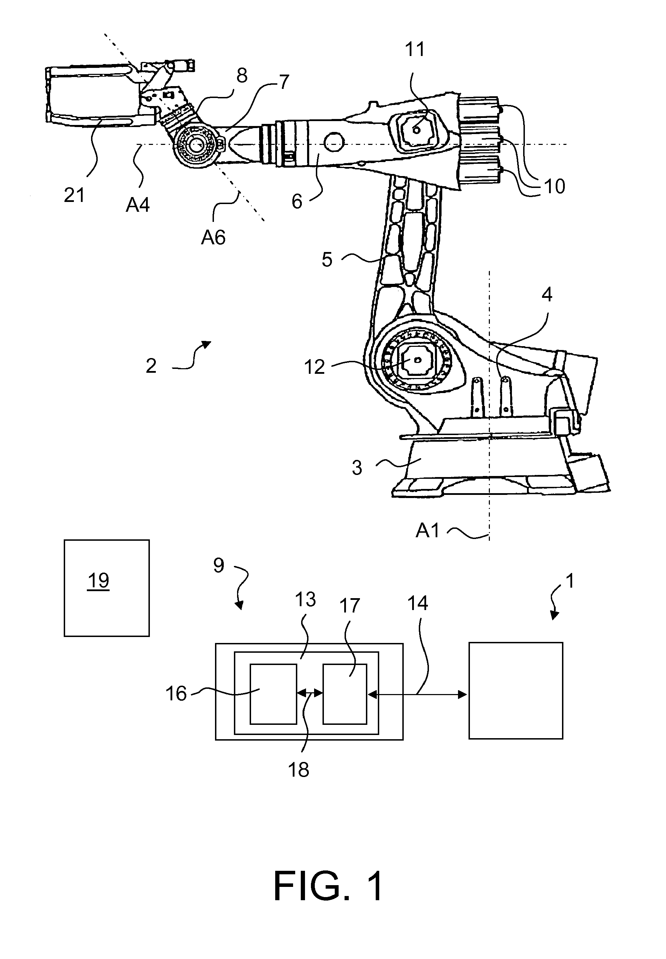

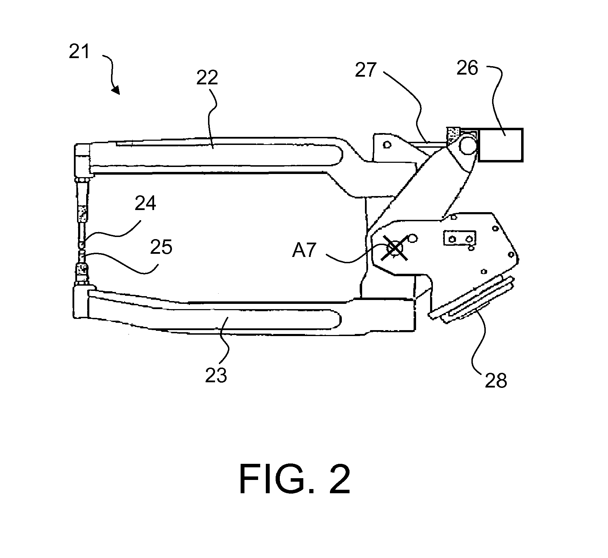

Die Fig. 1 zeigt einen Schweißroboter, der insbesondere zum Widerstandsschweißen, vorzugsweise zum Widerstandspunktschweißen vorgesehen ist. Der Schweißroboter weist einen Industrieroboter, eine in der Fig. 2 detaillierter gezeigte Schweißzange 21 und einen Schweißstromgenerator 1 auf. Der Industrieroboter umfasst einen Roboterarm 2 und eine Robotersteuervorrichtung 9 zum Bewegen des Roboterarms 2. Die Schweißzange 21 ist an einer Befestigungsvorrichtung 8 des Roboterarms 2 an diesem befestigt und kann somit mittels des Roboterarms 2 bewegt werden.

Der Roboterarm 2 umfasst im Falle des vorliegenden Ausführungsbeispiels mehrere, nacheinander angeordnete und mittels Gelenke verbundene Glieder. Bei den Gliedern handelt es sich insbesondere um ein ortsfestes oder bewegliches Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit der beispielsweise als Flansch ausgeführten Befestigungsvorrichtung 8 zum Befestigen der Schweißzange 21. Die Schwinge 5 ist am unteren Ende z.B. an einem nicht näher dargestellten Schwingenlagerkopf auf dem Karussell 4 um eine vorzugsweise horizontale Achse schwenkbar gelagert. Am oberen Ende der Schwinge 5 ist wiederum um eine ebenfalls vorzugsweise horizontale Achse der Ausleger 6 schwenkbar gelagert. Dieser trägt endseitig die Roboterhand 7 mit ihren vorzugsweise drei Achsen, von denen die Achse A4 und A6 in der Figur 1 dargestellt sind.

Um den Roboterarm 2 zu bewegen, umfasst dieser mit der Robotersteuervorrichtung 9 verbundene Antriebe, die insbesondere elektrische Antriebe, im Falle des vorliegenden Ausführungsbeispiels geregelte elektrische Antriebe sind. In der Figur 1 sind nur einige der elektrischen Motoren 10 bis 12 dieser elektrischen Antriebe gezeigt. Auf der Robotersteuervorrichtung 9 läuft ein Rechenprogramm 13, mittels dem die Robotersteuervorrichtung 9 im Betrieb des Industrieroboters diesen beispielsweise derart ansteuert, dass die Befestigungsvorrichtung 8 oder ein sogenannter Tool Center Point eine vorbestimmte Bewegung ausführt. Gegebenenfalls regelt die Robotersteuervorrichtung 9 die Antriebe, wie dies im Prinzip dem Fachmann bekannt ist.

Im Falle des vorliegenden Ausführungsbeispiels weist die Schweißzange 21, wie dies dem Fachmann im Prinzip bekannt ist, zwei Elektrodenarme 22, 23 auf, an deren Enden jeweils eine Schweißelektrode 24, 25 angeordnet sind. Die beiden Elektrodenarme 22, 23 können relativ zueinander um eine Achse A7, welche senkrecht zur Zeichenebene der Fig. 2 ausgerichtet ist, mittels eines Zangenantriebs verschwenkt werden. Dadurch ist es möglich, die beiden Elektroden 24, 25 gegen wenigstens zwei mittels Widerstandspunktschweißens zu verschweißende Gegenstände zu drücken. Im Falle des vorliegenden Ausführungsbeispiels umfasst der Zangenantrieb einen Elektromotor 26 und eine mit einem der Elektrodenarme 22 verbundene Spindel 27, die vom Elektromotor 26 angetrieben wird, um die beiden Elektrodenarme 22, 23 bezüglich der Achse A7 zu verschwenken. Die Schweißzange 21 umfasst ferner eine Befestigungsvorrichtung 28, mittels derer die Schweißzange 21 an der Befestigungsvorrichtung 8 des Roboterarms 2 befestigt ist.

Im Falle des vorliegenden Ausführungsbeispiels umfasst das Rechenprogramm ein erstes Rechenprogramm 16 und ein zweites Rechenprogramm 17. Das erste Rechenprogramm 16 ist vorgesehen, die Antriebe des Roboterarms 2 und den Elektromotor 26 des Zangenantriebs anzusteuern. Wenn es sich bei den Antrieben des Roboterarms um geregelte elektrische Antriebe handelt, dann ist die Robotersteuervorrichtung 9 derart ausgeführt, dass sie mittels des Rechenprogramms 13 bzw. des ersten Rechenprogramms 16 den geregelten elektrischen Antrieben Soll-Werte für deren Bewegungen übermittelt.

Das zweite Rechenprogramm 17 ist im Falle des vorliegenden Ausführungsbeispiels vorgesehen, den Schweißstromgenerator 1 derart anzusteuern, sodass dieser die Schweißelektroden 24, 25 mit einer vorgegebenen elektrischen Energie versorgt. Der Schweißstromgenerator 1 umfasst z.B. einen Mittelfrequenz-Schweißumrichter, einen Schweißtrafo und einen Schweißgleichrichter, wie dies dem Fachmann im Prinzip bekannt ist. Der Schweißstromgenerator 1 ist im Falle des vorliegenden Ausführungsbeispiels eingerichtet, eine einstellbare gepulste elektrische Spannung zu erzeugen, damit durch die Schwei-βelektroden 24, 25 während des Widerstandspunktschweißens ein vorgegebener elektrischer Strom fließt. Die Robotersteuervorrichtung 9 übermittelt im Falle des vorliegenden Ausführungsbeispiels mittels des zweiten Rechenprogramms 17 während des Vorgangs des Widerstandspunktschweißens dem Schweißstromgenerator 1 eine Information über diesen vorgegebenen elektrischen Strom. Für die Kommunikation umfasst das zweite Rechenprogramm 17 z.B. eine erste bidirektionale Schnittstelle 14 zum Schweißstromgenerator 1. Über die erste bidirektionalen Schnittstellen 14 übermittelt der Schweißstromgenerator 1 eine Information insbesondere in Echtzeit, vorzugsweise in harter Echtzeit über den aktuellen Schweißwiderstand, der über die Schweißelektroden 24, 25 anliegt aufgrund des Schweißstroms und der vom Schweißstromgenerator 1 erzeugten elektrischen Spannung.

Das zweite Rechenprogramm 17 kann über eine zweite bidirektionale Schnittstelle 18 zum ersten Rechenprogramm 16 mit diesem insbesondere in Echtzeit, vorzugsweise in harter Echtzeit, kommunizieren.

Das auf der Robotersteuervorrichtung 9 laufende Rechenprogramm 13 ist also derart ausgeführt, dass es eine Bewegungssteuerung des Roboterarms 2 und des Elektromotors 26 des Zangenantriebs insbesondere in Form des ersten Rechenprogramms 16 und eine Schweißsteuerung in Form des zweiten Rechenprogramms 17 umfasst.

Im Falle des vorliegenden Ausführungsbeispiels ist das Rechenprogramm 13 nicht nur derart ausgeführt, dass die Robotersteuervorrichtung 9 die Bewegung der Antriebe des Roboterarms 2 steuert, sondern auch eine Regelung des elektrischen Schweißwiderstandes, also des elektrischen Widerstandes der zu verschweißenden Gegenstände in Abhängigkeit der Kraft, mit der die Schweißelektroden 24, 25 mittels des Elektromotors 26 des Schweißantriebs gegen die zu verschwei-βenden Gegenstände drückt. Für diese Regelung wird also der elektrische Schweißwiderstand, also der elektrische Widerstand der zu verschweißenden Gegenstände in Abhängigkeit der Kraft, mit der die wenigstens zwei Gegenstände durch die Schweißzange 21 während des Schweißens zusammen gedrückt werden, als Führungsgröße verwendet. Diese Regelung wird im Falle des vorliegenden Ausführungsbeispiels mittels des zweiten Rechenprogramms 17 realisiert, welche dem ersten Rechenprogramm 16 eine entsprechende Information zum Ansteuern des Elektromotors 26 des Zangenantriebs insbesondere in Echtzeit, vorzugsweise in harter Echtzeit übermittelt.

Somit realisiert das zweite Rechenprogramm 17 beispielsweise folgende Regelung, wobei Pos die Position bzw. Stellung des Elektromotors 26 des Zangenantriebs, $R_{Ist}$ der Ist-Wert des Schweißwiderstandes und $R_{soll}$ der Soll-Wert des Schweißwiderstandes ist, und ∆Pos eine Änderung der Stellung des Elektromotors 26 des Zangenantriebs zugeordnetes Signal darstellt:

$$Pos = f(R_{Ist})$$

$$\Delta Pos = f(R_{Ist}-R_{Soll})$$

Somit ist die Robotersteuervorrichtung 9 bzw. das darauf laufende Rechenprogramm 13 derart ausgeführt, dass die komplette Steuerung bzw. Regelung des Schweißvorgangs mittels einer einzigen Steuerung, nämlich derjenigen Steuerung, welche für die Bewegung des Roboterarms 2 vorgesehen ist, verwirklicht ist. Dadurch ist es insbesondere möglich, eine Synchronisation der Bewegung des Roboterarms 2, des Schweißstromgenerators 1, der Schweißzange 21 und deren Zangenantrieb verbessert zu realisieren.

Im Falle des vorliegenden Ausführungsbeispiels ist das auf der Robotersteuervorrichtung 9 laufende Rechenprogramm 13 eingerichtet, den Elektromotor 26 des Zangenantriebs aufgrund einer Referenzkurve eines Soll-Schweißwiderstandes regelnd anzusteuern. Die Referenzkurve des Soll-Schweißwiderstandes kann vorzugsweise automatisch erzeugt werden. Dadurch regelt die Robotersteuervorrichtung 9 den zeitlichen Verlauf des Schweißwiderstands während des Schweißvorgangs aufgrund der Referenzkurve durch Ansteuern des Elektromotors 26 des Zangenantriebs.

Das auf der Robotersteuervorrichtung 9 laufende Rechenprogramm 13, insbesondere das zweite Rechenprogramm 17 kann auch zusätzlich derart ausgeführt sein, dass die Robotersteuervorrichtung 9 den Zangenantrieb 21 gemäß einem Sollwert-Profil der von den Elektroden 24, 25 aufzubringenden Kraft regelnd ansteuert.

Das zweite Rechenprogramm 17 kann auch vom ersten Rechenprogramm 16 Daten zur Schließung der Schweißzange 21 erhalten und den Schweißstromgenerator 1 abhängig von dieser Bewegung ansteuern. Das zweite Rechenprogramm 17 kann dem ersten Rechenprogramm 16 vorgeben, den Elektromotor 26 des Zangenantriebs für ein Öffnen der Schweißzange 21 anzusteuern. Das zweite Rechenprogramm 17 kann von dem ersten Rechenprogramm 16 Daten zur Drehung der Schweißzange 21 um einen Schweißpunkt erhalten und den Schweißstromgenerator 1 abhängig von dieser Drehung ansteuern. Das zweite Rechenprogramm 17 kann auch mit einer Kalibrierstation 19 für Schweißzangen Daten bidirektional insbesondere in Echtzeit austauschen. Außerdem kann eine automatische Kalibrierung elektrischer und mechanischer Kenngrößen der Schweißzange 21 vorgesehen sein.

**Patentansprüche**

1.  Schweißroboter zum Widerstandsschweißen, aufweisend

    - eine Schweißzange (21), die einen Zangenantrieb (26, 27) und zwei, mittels des Zangenantriebs (26, 27) gegeneinander drückbare Schweißelektroden (24, 25) aufweist, welche im bestimmungsgemäßen Betrieb des Schweißroboters gegen wenigstens zwei mittels Widerstandsschweißens zu verschweißende Gegenstände drücken,
    - einen mit den Schweißelektroden (24, 25) verbundenen Schweißstromgenerator (1) zum Versorgen der Schweißelektroden (24, 25) mit elektrischer Energie während des Widerstandsschweißens, und
    - einen Industrieroboter, der einen Roboterarm (2) und eine Robotersteuervorrichtung (9) zum Bewegen des Roboterarms (2) aufweist, wobei der Roboterarm (2) mehrere, hintereinander angeordnete Glieder und mit der Robotersteuervorrichtung (9) verbundene Antriebe aufweist, am Roboterarm (2) die Schweißzange (21) befestigt ist, die Robotersteuervorrichtung (9) mit dem Schweißstromgenerator (1) und dem Zangenantrieb (26, 27) verbunden ist und auf der Robotersteuervorrichtung (9) ein Rechenprogramm (13) läuft, welches die Antriebe des Roboterarms (2) für dessen Bewegung ansteuert, den Zangenantrieb (26, 27) derart regelnd ansteuert, sodass während des Widerstandsschweißens an den Schweißelektroden (24, 25) ein vorgegebener elektrischer Soll-Schweißwiderstand anliegt, und den Schweißstromgenerator (1) derart ansteuert, sodass dieser die Schweißelektroden (24, 25) mit einer vorgegebenen elektrischen Energie versorgt.

2. Schweißroboter nach Anspruch 1, dessen Rechenprogramm (13) eine erste bidirektionale Schnittstelle (14) zum Schweißstromgenerator (1) aufweist, über die die Robotersteuervorrichtung (9) mittels des Rechenprogramms (13) mit dem Schweißstromgenerator (1) kommuniziert.

3. Schweißroboter nach Anspruch 1 oder 2, bei dem das auf der Robotersteuervorrichtung (9) laufende Rechenprogramm (13) derart ausgeführt ist, dass es während des Vorgangs des Widerstandsschweißens dem Schweißstromgenerator (1) eine Information über einen elektrischen Soll-Strom für die Schweißelektroden (24, 25) übermittelt und der Schweißstromgenerator (1) insbesondere eingerichtet ist, eine elektrische Versorgungsspannung für die Schweißelektroden (24, 25) derart zu erzeugen, dass durch die Schweißelektroden (24, 25) zumindest im Mittel der elektrische Soll-Strom fließt.

4. Schweißroboter nach einem der Ansprüche 1 bis 3, bei dem der Schweißstromgenerator (1) der Robotersteuervorrichtung (9) eine Information über den aktuellen Scheißwiderstand übermittelt.

5. Schweißroboter nach einem der Ansprüche 1 bis 4, bei dem das auf der Robotersteuervorrichtung (9) laufende Rechenprogramm (13) den Zangenantrieb (26, 27) aufgrund einer Referenzkurve eines Soll-Schweißwiderstandes regelnd ansteuert, wobei insbesondere die Referenzkurve des Soll-Schweißwiderstandes automatisch erzeugt wird.

6. Schweißroboter nach einem der Ansprüche 1 bis 5, bei dem das auf der Robotersteuervorrichtung (9) laufende Rechenprogramm (13) derart ausgeführt ist, dass die Robotersteuervorrichtung (9) den Zangenantrieb (26, 27) gemäß einem Sollwert-Profil der von den Elektroden (24, 25) aufzubringenden Kraft regelnd ansteuert.

7. Schweißroboter nach einem der Ansprüche 1 bis 6, bei dem die Antriebe des Roboterarms (2) als geregelte elektrische Antriebe ausgeführt sind und die Robotersteuervorrichtung (9) mittels des Rechenprogramms (13) den geregelten elektrischen Antrieben Soll-Werte für deren Bewegungen übermittelt.

8. Schweißroboter nach einem der Ansprüche 1 bis 7, bei dem das Rechenprogramm (13) ein erstes Rechenprogramm (16) und ein zweites Rechenprogramm (17) umfasst, wobei das erste Rechenprogramm (16) vorgesehen ist, die Antriebe des Roboterarms (2) und insbesondere den Zangenantrieb (26, 27) anzusteuern, und das zweite Rechenprogramm (17) vorgesehen ist, den Schweißstromgenerator (1) derart anzusteuern, sodass dieser die Schweißelektroden (24, 25) mit der vorgegebenen elektrischen Energie versorgt und Soll-Werte für das Ansteuern des Zangenantriebs (26, 27) erzeugt, sodass während des Widerstandsschweißens an den Schweißelektroden (24, 25) der vorgegebene elektrische Soll-Schweißwiderstand anliegt.

9. Schweißroboter nach Anspruch 8, bei dem das zweite Rechenprogramm (17) über eine zweite bidirektionale Schnittstelle (18) mit dem ersten Rechenprogramm (16) bidirektional kommuniziert.

10. Schweißroboter nach Anspruch 8 oder 9, bei der die Robotersteuervorrichtung (9) mittels des zweiten Rechenprogramms mit dem Schweißstromgenerator (1) insbesondere über einen schnellen Feldbus bidirektional in Echtzeit kommuniziert, und/oder gleichzeitig den Schweißstromgenerator (1) und den Zangenantrieb (26, 27) ansteuert, und/oder gleichzeitig den Zangenantrieb (26, 27) und die Antriebe des Roboterarms (2) ansteuert, und/oder das zweite Rechenprogramm vom ersten Rechenprogramm Daten zur Schließung der Schweißzange (21) erhält und den Schweißstromgenerator (1) abhängig von dieser Bewegung ansteuert, und/oder das zweite Rechenprogramm dem ersten Rechenprogramm vorgibt, den Zangenantrieb (26, 27) für ein Öffnen der Schweißzange (21) anzusteuern, und/oder das zweite Rechenprogramm von dem ersten Rechenprogramm Daten zur Drehung der Schweißzange (21) um einen Schweißpunkt erhält und den Schweißstromgenerator (1) abhängig von dieser Drehung ansteuert, und/oder das zweite Rechenprogramm mit einer Kalibrierstation (17) für Schweißzangen Daten bidirektional insbesondere in Echtzeit austauscht, und/oder eine automatische Kalibrierung elektrischer und mechanischer Kenngrößen der Schweißzange (21) vorgesehen ist.

FIG. 1

# FIG. 2

**IN DER BESCHREIBUNG AUFGEFÜHRTE DOKUMENTE**

**In der Beschreibung aufgeführte Patentdokumente**

- DE 3115840 A1
- EP 1508396 B1